# EUROPEAN PATENT SPECIFICATION

(11) **EP 2 133 662 B1**
(45) Date of publication and mention of the grant of the patent: **01.02.2012**
(21) Application number: 09162088.0
(22) Date of filing: 05.06.2009
(51) Int. Cl.: G01C 21/00, G01C 21/16

(54) **Methods and system of navigation using terrain features**
Navigationsverfahren und -system unter Verwendung von Geländemerkmalen
Procédés et système de navigation utilisant des propriétés du terrain

(30) Priority: 09.06.2008 US 135900
(43) Date of publication of application: 16.12.2009
(73) Proprietor: Honeywell International Inc., Morristown, NJ 07962 (US)
(72) Inventor: Krishnaswamy, Kailash, Morristown, NJ 07962-2245 (US); Soehren, Wayne A., Morristown, NJ 07962-2245 (US); Lommel, Peter, Morristown, NJ 07962-2245 (US)
(74) Representative: Buckley, Guy Julian

(56) References cited:
- WO-A1-2006/084385
- GB-A- 2 289 389

## Description

### BACKGROUND

Simultaneous localization and mapping (SLAM) is a navigation process used by numerous autonomous vehicle platforms for navigating to a destination while simultaneously generating a map of surrounding terrain. The SLAM process is indifferent with respect to various sensor technologies and typically comprises a Kalman filter to generate a map which contains "features," or processed sensor returns of the surrounding terrain. Typically, any navigation provided by the SLAM process is not based on any prior study or examination of the terrain. As a result, any mapping and localization errors during the navigation process contribute to a growing uncertainty in position estimates of the vehicle, commonly referred to as navigation drift. Since this uncertainty exists in current implementation of SLAM, SLAM is not considered a reliable stand-alone navigational aid. Thus, there is a need in the art for improvements in navigation using terrain features.

GB 2289389 discloses a method for updating the inertial navigation of a missile autonomously heading for a remote target using an image generating sensor looking downwards and sideways to cover terrain flown over.

WO 2006/084385 discloses a photo realistic 3-D imaging system obtained from a mobile stereo camera for detecting and tracking features in image sequences and which self-references features to a database to track camera motion.

### SUMMARY

The present invention in its various aspects is as set out in the appended claims. The following specification provides at least one method and system of navigation using terrain features. Particularly, in one embodiment, a method of navigating from terrain features according to appended claim 7 is provided. The method identifies a set of terrain features of an area substantially surrounding a navigation platform having a system for simultaneous localization and mapping. For each terrain feature identified, the method records current navigational data as the navigation platform traverses the area, and correlates the current navigational data of each of the identified local terrain features with prior navigational data of previously-determined terrain features from an existing terrain mapping database accessed by the navigation platform to within a prescribed correlation threshold. From at least the correlated navigational data of the identified terrain features, the method provides a current position estimate for the navigation platform.

### BRIEF DESCRIPTION OF THE DRAWINGS

These and other features, aspects, and advantages are better understood with regard to the following description, appended claims, and accompanying drawings where:
FIG. 1 is a block diagram of an embodiment of a navigation system;
FIG. 2 is a model of an embodiment of a object detected by a navigation system using terrain features;
FIG. 3 is a process diagram of an embodiment of a method for navigating using a navigation system to detect terrain features; and
FIG. 4 is a flow diagram of an embodiment of a method of navigating from terrain features.

The various described features are drawn to emphasize features relevant to the embodiments disclosed. Like reference characters denote like elements throughout the figures and text of the specification.

### DETAILED DESCRIPTION

The following detailed description relates to at least one embodiment of navigation using terrain features from an existing terrain map, and combining existing terrain features in an *a priori* database with additional terrain features determined in near real time. For example, at least one navigational sensor element, in communication with an inertial measurement unit (IMU), provides terrain feature correlation from the existing map of terrain features and the near real time determination of the same and any additional features, including the presence of any new objects within the area presently under navigation. In one embodiment, the map comprises a digital terrain elevation data (DTED) database having the terrain features of previously-identified landmarks. The near real time correlation that identifies any of the additional features (objects) existing in the area identified in the DTED database is accomplished using either vision- or laser-based sensor elements of a system having simultaneous localization and mapping (SLAM).

For purposes of this description, the terrain features of the previously-identified landmarks are referred to as "certain" terrain features recorded in the *a priori* database, and the newly-identified object features are referred to as "uncertain" terrain features. In addition, the terrain feature correlation methods discussed herein comprise at least one method of navigation using a SLAM framework that filters the correlated certain and uncertain terrain feature measurements with a current tracking of "unmatched" landmark or object features that have not been identified as either certain or uncertain terrain features. Moreover, the navigation by terrain features discussed herein provides substantially driftless navigation based on any updates in position and attitude estimates from a host platform having the navigation system, as discussed in further detail below.

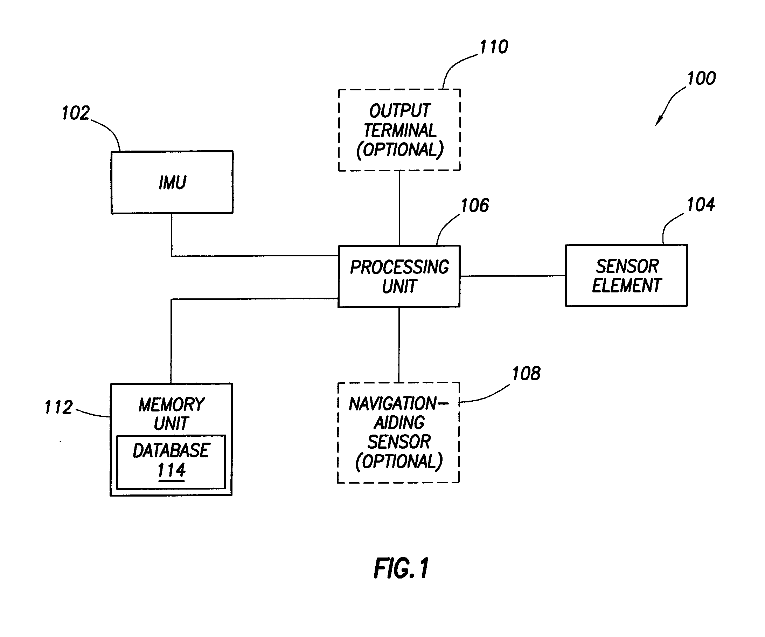

FIG. 1 is a block diagram of an embodiment of a navigation system 100. The system 100 comprises at least a processing unit 106, a memory unit 112, an IMU 102, and a sensor element 104. The sensor element 104 and the IMU 102 are each coupled to the processing unit 106 and provide input data to the processing unit 106 for estimating motion (for example, position, velocity, or any suitable combination thereof). The memory unit 112 includes a database 114 in operative communication with the processing unit 106. The system 100 further comprises an optional navigation-aiding sensor 108 and an optional output terminal 110, each of which are in operative communication with the processing unit 106. In the example embodiment of FIG. 1, the system 100 resides on or is associated with a particular host platform including, without limitation, an aircraft, an automobile, a person, or any other navigation platform that requires near real-time, multi-dimensional SLAM navigation information.

In one implementation, the optional navigation-aiding sensor 108 is one of a global positioning system (GPS) sensor, a magnetometer, a barometric altimeter, a Doppler radar, an odometer, and any other suitable navigation-aiding sensor or sensor element. For example, the system 100 is considered an inertial navigation system when the primary navigation function is based on processing the IMU sensor data. Similarly, the system 100 is considered a dead-reckoning navigation system when the primary navigation function is based on a heading measurement from the optional magnetometer or other heading measurement method, such as a heading gyro, and a measurement of distance traveled from the optional odometer, Doppler radar, or other distance-traveled measurement method. Inertial navigation, dead reckoning, or a hybrid of inertial and dead reckoning are further possible implementations.

The IMU 102 measures motion in at least three degrees of freedom. In particular, the IMU 102 includes sensors to measure acceleration along three orthogonal coordinate axes and angular acceleration about each of the three orthogonal coordinate axes. For example, the IMU 102 comprises, but is not limited to, up to three linear accelerometers configured to obtain acceleration along the three coordinate axes, and up to three gyroscopes to measure angular acceleration about the same three coordinate axes. In other words, the gyroscope measurements are used to estimate attitude or orientation of the host platform, and the accelerometer measurements are used to estimate position and velocity, including the effects of gravity. As described in further detail below, the processing unit 106 determines an absolute orientation (position) of the system 100 based on the motion measured by the IMU 102.

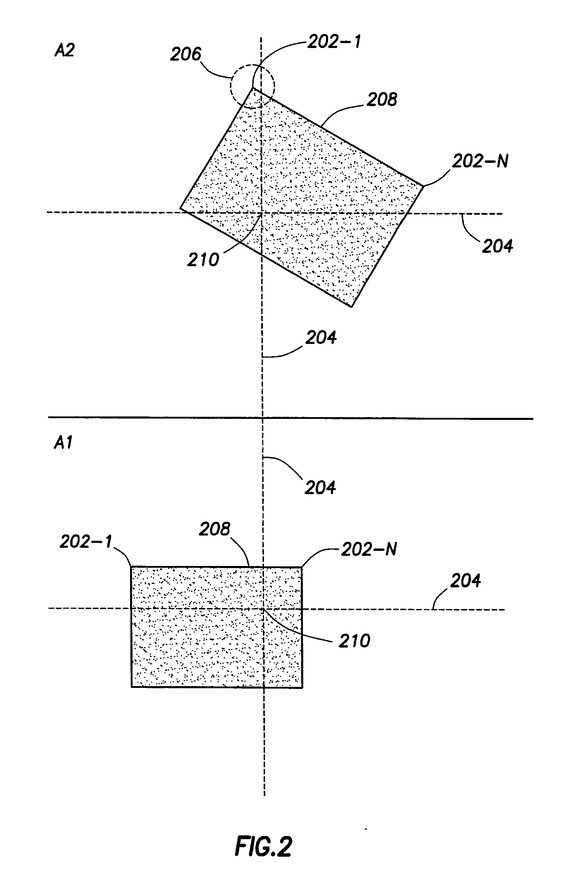

The sensor element 104 transmits a signal (for example, a laser) out to at least one terrain feature, as further discussed below with respect to FIG. 2. The transmitted signal interacts with and is modified by the at least one terrain feature. For example, at least some of the transmitted signal is reflected (scattered) back to the sensor element 104 for analysis by the processing unit 106. The change in the properties of the reflected signal enables one or more characteristics of the at least one terrain feature to be determined (for example, light reflected from a corner or elevation point of the at least one terrain feature).

In one implementation, the sensor element 104 is at least one of a vision sensor, range finder, millimeter wave radar, or ladar (laser detection and ranging radar). It is understood that the sensor element 104 is suitable for implementation in any appropriate manner for emitting or receiving a signal with any other current and future multi-dimensional sensor technology. For example, the sensor element 104 embodied as the range finder measures the distance from the range finder in the host platform to the terrain feature by emitting light in a single (for example, a horizontal) direction. The time for the light to travel out to the terrain feature and back to the range finder is used to determine the range to the terrain feature. Similarly, the sensor element 104 embodied as the ladar measures the distance from the ladar to the terrain feature by emitting light in multiple directions at substantially the same time.

In a similar implementation, the sensor element 104 is used concurrently with the navigation-aiding sensor 108. For example, when the navigation-aiding sensor 108 is embodied as the GPS sensor, the sensor element 104 can be used whenever a GPS satellite signal is unavailable or concurrently with the GPS sensor regardless of availability of a GPS satellite signal. Alternatively, the navigation-aiding sensor 108 is omitted in some embodiments. In such embodiments, data from the IMU 102 is only updated with measurements from the sensor element 104.

The processing unit 106 comprises a plurality of program instructions for carrying out the various process tasks, calculations, and generation of signals and other data used in the operation of the system 100, such as to correlate the location of the terrain features of the database 114 with current navigation measurements and to determine the velocity and position of the device in which system 100 is located. For example, the system 100 uses the sensor element 104 to correct and update the terrain features stored in the database 114 based on IMU data from the IMU 102. In some embodiments, the calculated position based on the IMU data from the IMU 102 is combined with the calculated position from the sensor element 104. In other embodiments, the calculated position from the sensor element 104 is used in place of the calculated position based on the IMU data from the IMU 102. In such embodiments, the processing unit 106 estimates the location of the terrain features in a plurality of scans captured by the sensor element 104. It is understood that the plurality of scans discussed herein refer to at least one of a plurality of line, range, or flash scans.

In operation, the sensor element 104 measures, within a first frame, terrain features of an area adjacent to the system 100 at a first time and within at least one second frame at a second time. The IMU 102 obtains navigational data at the first and second times. In one embodiment, the processing unit 106 predicts a current state and position of the system 100 within the first and second times using the IMU 102 and the sensor element 104. The processing unit 106 correlates the actual scan location of one or more of the terrain features of the area adjacent to the system 100 from the first and second times, as discussed in further detail below. In the example embodiment of FIG. 1, the processing unit 106 uses at least one form of a probability distribution, or probability distribution function (PDF), to perform terrain feature correlation in up to three dimensions based on the measurements obtained from the sensor element 104.

In at least one similar embodiment, the memory unit 112 stores terrain feature data in the database 144 based on the terrain features obtained at the first and second times by the processing unit 106. The memory unit 112 records navigational properties of the terrain features in at least one of the second frames based at least in part on the navigational data from the first and second times in the database 114 as discussed below.

In one implementation, the processing unit 106 combines the estimated position from the IMU 102 and the sensor element 104 to obtain a more accurate position estimate. For example, the processing unit 106 identifies a first scan location of the one or more terrain features in each first frame, selects a second scan location in the at least one second range based on the motion data from the inertial measurement unit, and evaluates frame scans near the second scan location to identify the actual scan location of the one or more terrain features in the at least one second frame. The processing unit 106 then correlates each of the terrain features by comparing a position estimate of each of the terrain features in the two first frames with the position estimate of each of the terrain features in the at least one second frame. Moreover, the processing unit 106 estimates position based on the navigational data received from at least one of the GPS sensor 108, the IMU 102, and the sensor element 104.

In one embodiment, the output terminal 110 displays the terrain features of previously-identified landmarks and any additional objects present in the area adjacent to the system 100, and displays the current state and position of the system 100 based on signals received from the processing unit 106. In some embodiments, the more accurate position estimate is (optionally) obtained from the output terminal 110. For example, an automobile using the system 100 (as the host platform) will use navigation data provided by the output terminal element 110 to display to a driver of the automobile where the automobile is located on a map. In other embodiments, the processing unit 106 uses the more accurate estimate to determine the necessary actions to take in order to reach a programmed destination, as described in the '893 Application.

To achieve the terrain feature navigation discussed herein, the processing unit 106 correlates the location of a first set of terrain features from each of the scan images processed at a first moment in time with the location of at least a second set of terrain features from each of the scan images processed at a second moment in time. In the example embodiment of FIG. 1, the processing unit 106 predicts the location of each set of the terrain features in the scans from the sensor element 104 at the second moment in time based on data received from the IMU 102 and the location of the first set of terrain features in scans obtained at the first moment in time. The prediction of the location of the second set of terrain features in the second image is described in more detail below with respect to FIG. 2. In one embodiment, the processing unit 106 filters the correlated terrain features using three-dimensional (3-D) feature probability distribution measurements provided from the sensor element 104. For example, the processing unit 106 determines the change in position of the host platform based on the probability distribution between the first and second sets of terrain features, and updates the terrain feature data stored in the database 114 based on the filtered set of terrain feature measurements.

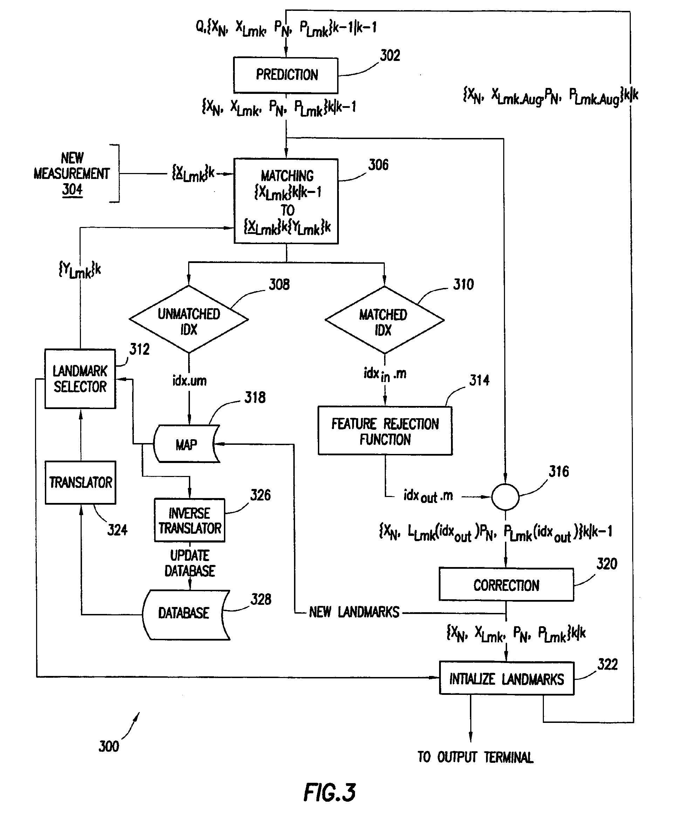

FIG. 2 is a model of an embodiment of an object 208 detected by the system 100 using terrain features. For example, as shown in FIG. 2, the sensor element 104 of FIG. 1 captures a scan image A1 at time T1 and a scan image A2 at time T2. The scan images A1 and A2 are provided by way of explanation and not by way of limitation. It is to be understood that the object 208 and the scan images A1 and A2 will vary in operation depending on the area near the object 208 in which the system 100 is located. In particular, although the object 208 is shown as a rectangle in FIG. 2, it is to be understood that in other embodiments the object 208 is any appropriate landmark or object from which certain, uncertain, or unmatched terrain features are determined (for example, the object 208 is one of a tunnel, a building, a tower, a tree, a river, or the like). These certain, uncertain, or unmatched terrain features, as described herein with respect to FIGS. 2 and 3, refer to any geometric terrestrial entity (for example, a particular elevational point, contour, plane, or surface) of the object 208 discovered in a set of one or more scans that have a high contrast with respect to the surrounding scans in the images A1 and A2. For example, the terrain features are correlated using a determined probability distribution for each terrain feature, where the terrain features from the scan image A1 at time T1 have a substantially similar probability distribution as the same terrain features in the scan image A2 at time T2.

In the example embodiment of FIG. 2, the object 208 comprises a plurality of terrain features 202₁ to 202_{N}. Also shown in each of the scan images A1 and A2 are coordinate axes 204. The coordinate axes 204 are provided for purposes of explanation, but are not necessary for operation. In particular, the coordinate axes 204 demonstrate the relative position of the object 208 in each of the scan images A1 and A2.

In operation, the sensor element 104 obtains the scan image A1 at the time T1 and the scan image A2 and the time T2. As illustrated in FIG. 2, the object 208 is offset differently from a center 210 in the scan image A1 and in the scan image A2. In one implementation, once the scan images A1 and A2 are captured, the processing unit 106 of FIG. 1 locates the terrain features 202₁ to 202_{N} in each of the scan images A1 and A2. Once the terrain features 202₁ to 202_{N} are located, the processing unit 106 correlates the respective locations of each of the terrain features 202 in the scan image A1 with the same terrain features 202 in the scan image A2. For example, the processing unit 106 correlates the location of terrain feature 202₁ in the scan image A1 with the location of terrain feature 202₁ in the scan image A2. Any appropriate technique will locate the terrain features 202₁ to 202_{N} (for example, at least one of a Harris corner detector and a Kanade-Lucas-Tomasi, or KLT, corner detector, as discussed in the '893 Application). In the navigation methods discussed above and in further detail below with respect to FIG. 3, the system 100 comprises at least one process for driftless SLAM (D-SLAM) navigation that filters the correlated measurements to determine the updated position and attitude estimates for the navigation platform provided in FIGS. 1 and 2.

For example, once each of the terrain features 202 are correlated, the processing unit 106 determines the position and attitude estimate of the object 208. For example, in this embodiment, the host platform that comprises the system 100 has banked and turned to the left as well as pitched downward. The movement of the host platform causes the object 208 as depicted in the scan image A2, for example, to move and rotate to the right, and to move up in the scan image A2. In the example embodiment of FIG. 2, the host platform moves toward the object 208 causing the object 208 to be larger in the scan image A2. Therefore, the terrain features 202₁ to 202_{N} in the scan image A2 are not located near the original position (that is, the scan location) of the terrain features 202₁ to 202_{N} in the scan image A1.

The processing unit 106 uses IMU data received from the IMU 102 to determine an approximate location of the terrain features 202₁ to 202_{N} in the scan image A2. For example, the processing unit 106 locates the terrain feature 202₁ in the scan image A1 as a starting point. The processing unit 106 propagates the location of the terrain feature 202₁ forward based on data received from the IMU 102 over the time period between time T1 and time T2. In propagating the location forward, the processing unit 106 identifies an area 206 in which the terrain feature 202₁ is located. The area 206 results from the known approximate error of measurements obtained from the IMU 102. For example, if the IMU 102 measures a lateral movement of two meters to the right over a time period of one second but has a known error of about 0.1 meters/second, the actual location of terrain feature 202₁ is between about 1.9 - 2.1 meters to the right of its location at time T1. The processing unit 106 evaluates the scans in the area 206 to identify the actual location of the terrain feature 202₁ in the scan image A2.

In the example embodiment of FIG. 2, the processing unit 106 uses known techniques, such as the KLT corner detection, to locate the terrain feature 202₁ in the area 206. By focusing on the area 206 of the scan image A2 rather than the entire scan image, the processing unit 106 is able to locate the terrain feature 202₁ substantially faster than in known navigation systems that search substantially larger areas. The processing unit 106 uses the IMU data to estimate the location of the terrain features 202₁ to 202_{N}, as further discussed below with respect to FIG. 3.

FIG. 3 is a process diagram of an embodiment of a method 300 for navigating using a navigation system to detect terrain features. In one embodiment, the method 300 addresses detecting terrain features using the navigation system and host platform depicted in FIGS. 1 and 2. For example, in at least one implementation, data comprising the terrain features considered in the process of FIG. 3 includes, without limitation, digital terrain elevation data (DTED), shuttle radar topography model (SRTM) data, MICROSOFT Virtual Earth data, high-resolution terrain information (HRTI) data, or the like.

In one embodiment, the method 300 predicts motion of the host platform using a combination of previously-identified (that is, the "certain" terrain features discussed above) and one or more "uncertain" or "unmatched" terrain features (that is, the one or more terrain features that are currently being measured but not present or recorded in a terrain feature database represented at block 328). Moreover, at least a first data structure of the terrain feature database of block 328 comprises the certain, uncertain, and unmatched terrain features that are being measured in near real time and at least a second data structure stores the terrain features that were known *a priori.* In one implementation, one or more of the terrain features detected by the method 300 provide navigational information suitable for use by the host platform (such as latitude, longitude, altitude, or the like). This navigational information is also stored in the data structures of the database at block 328.

To further aid in the description of the method 300, the following description of nomenclature appearing in FIG. 3 is provided below:
**State of navigator, *X_{N}*** - position, velocity and attitude in three-dimensional (3-D) space
**States of landmark, *X_{Lmk}*, *Y_{Lmk}* -** position in 3-D space, where *Y_{Lmk}* represents at least one predicted terrain feature based on landmark identification
**Covariance of navigator, *P_{N} -*** uncertainty of state of navigator
**Covariance of landmark, *P_{Lmk}* -** uncertainty of state of landmark
**Covariance of measurement, *R* -** measurement noise
**Covariance of model, *Q* -** system model (process) noise
**Time interval, *k* -** completion time for one measurement interval

In operation, the method 300 identifies a first set of terrain features relative to the current location of the host platform in a first sensor scan at a first time (for example, terrain features within a sensor "field of view" for the host platform). In the example embodiment of FIG. 3, the states *X_{N}*, *X_{Lmk}* and the covariance values *Q*, *P_{N}* and *P_{Lmk}* are initially set at time *k* = 0. In one particular embodiment, the navigator and landmark states and covariance values are corrected in at least one measurement interval (for example, when time *k* = 1) as discussed in further detail below.

The method 300 locates at least a second set of the terrain features in near real time using inertial measurement data from the first sensor scan and the first set of terrain features located in the first sensor scan for a time period between the first and second times based at least in part on a landmark prediction model (block 302). For example, the landmark prediction module in block 302 comprises a 3-D terrain correlation model that locates at least the second set of the terrain features provided by the inertial measurement data from the first sensor scan. Moreover, in further determining the current location of the host platform, the prediction model of block 302 reads one or more new terrain feature measurements (for example, one or more new measurements 304) adjacent to an area surrounding the host platform at the first time scan. Based on the current states of the system from the prediction model of block 302, the method 300 locates at least the first set of terrain features from the second set of the terrain features in at least a second sensor scan received at the second time based at least in part on the inertial measurement data of the first time and position estimation of the host platform as discussed below.

The method 300 correlates the first and second sets of the presently identified terrain features to determine a current position estimate of the host platform with respect to the one or more terrain features (block 306). In one implementation, the matching module at block 306 matches the currently measured terrain features to the terrain features in the database and mapping module 318. With reference to the frame model discussed above with respect to FIG. 2, when the currently measured terrain features match a known location in the database frame of reference of the database and mapping module 318, the matching terrain feature data is used by a correction module 320 to locate the host platform in the database reference frame to substantially remove any navigational drift that has accumulated relative to the current location of the host platform. In one implementation, the method 300 provides the navigation system 100 with corrected navigational data in the event that the navigation system 100 is not able to correlate any of the measured terrain features to the terrain features previously identified in the database and mapping module 318.

As shown in FIG. 3, the method 300 compares the first and second sets of terrain features to determine if at least one of the "uncertain" or "unmatched" terrain features of the second set substantially correspond with (that is, matches) one or more of the "certain" terrain features of the first set. When the current terrain feature measurement does not have a match (for example, is a new landmark or object) the current terrain feature measurement is routed to an unmatched index (block 308). The current measurement that correspond is placed in a matched index (block 310). The unmatched terrain features are matched to a terrain feature database in connection with a terrain feature map block 318 as discussed in further detail below.

In one implementation, a feature rejection function module 314 validates the (now-correlated) set of terrain features to reject any predictions of the matching terrain features that exceed a prescribed prediction threshold. In one implementation, the feature rejection function module 314 uses a RANdom SAmple Consensus (RANSAC) program to reject bad feature matches. Further details regarding RANSAC are found in an article by M. A. Fischler, R. C. Bolles, "Random Sample Consensus: A Paradigm for Model Fitting with Applications to Image Analysis and Automated Cartography," Comm. of the ACM 24: 381-395 (June 1981), which is incorporated herein by reference.

The RANSAC program employed in the process of FIG. 3 uses an iterative technique to estimate parameters of a mathematical model from a set of observed data. The RANSAC program divides the data into (1) "inliers" (data points that can be explained by some set of model parameters), and (2) "outliers" (data points that do not fit the model). In the example embodiment of the process of FIG. 3, the outliers can arise from noise or erroneous prediction measurements of the terrain features. For example, the method 300 uses the near best terrain feature "candidates" between the predicted set of matching terrain features and the correlated set of matching terrain features to correct the predicted state of the measurement process depicted in FIG. 3 (block 316, and the correction module 320). In one embodiment, the correction module 320 comprises a Kalman filter, a D-SLAM filter, or the like, for correcting the predicted terrain feature measurements and substantially reducing any navigational drift present in the navigation system.

Referring back to the location of the (presently-identified) terrain features, in one embodiment, the method 300 determines a probability distribution of each of the located terrain features from the second sensor scan. In determining the probability distribution, the method 300 ensures that each of the located terrain features of the second sensor scan have a substantially similar feature point contrast level as the current prediction of a terrain feature *Y_{Lmk}* being located using a landmark sub-map from a database landmark selector module (block 312). In one embodiment, the landmark sub-map data is continually re-sampled in near real time as depicted in the process of FIG. 3 to further verify the probability distribution of the current terrain feature prediction. The landmark sub-map data from the database landmark selector module at block 312 further uses properties of one or more navigational sensors (such as the sensor field of view, a sensor focal length, and the like) used in the first and second sensor scans in determining the probability distribution of the located terrain features.

Moreover, in one implementation, the method 300 records the newly-identified, previously unmatched terrain features in a similar mapping structure as the first set of located terrain features. For example, after the correction module of block 320 corrects the predicted states of the (now-certain) terrain features with current measurements, a terrain feature map at block 318 is updated with the corrected position of each of the identified terrain features. Once all of the terrain features in the terrain feature map at block 318 are determined to be within a prescribed accuracy, the navigational data associated with the terrain features are translated using an inverse translator function (block 326). The translated navigation data are updated in the terrain feature database at block 328. In one embodiment, the translations performed by the inverse translator function at block 326 convert the (previously) uncertain and unmatched terrain features observed by the sensor element 104 of FIG. 1 into the same format of the certain terrain features in the terrain feature database at block 328.

The database and mapping module 318 uses the corrected state of the system to record the (previously) uncertain and unmatched newly terrain features into the map as new (additional) terrain features based, at least in part, on the position estimate of the host platform. In one implementation, the database landmark selector module at block 312 reads the terrain feature database at block 328 via a translator function at block 324 and the terrain feature map at block 318 to select at least a portion of the unmatched terrain features that will be matched against a new sensor measurement. Moreover, the selected unmatched terrain features are also the filtered landmark states of the correction module of block 320 that are initialized for the next set of measurements at block 322. In addition, the database and mapping module 318 provides the correlated set of terrain features as the corrected state of the system to the output terminal 110 of the navigation system at block 322, and returns to perform another measurement interval at block 302.

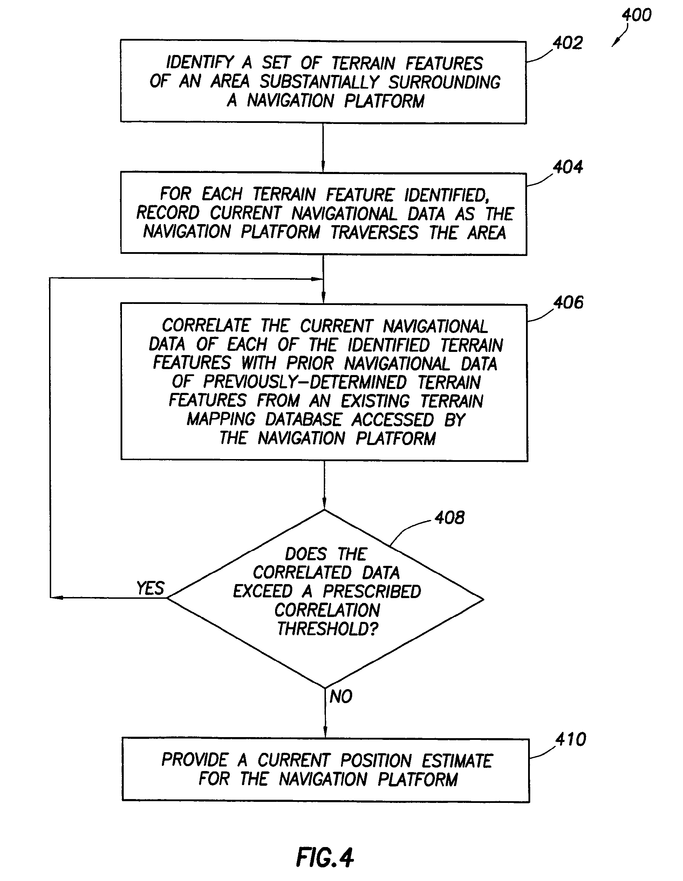

FIG. 4 is a flow diagram of an embodiment of a method of navigating from terrain features. The method 400 addresses terrain feature prediction and determination based on an existing terrain mapping database of "certain" terrain features and, in one embodiment, the method 400 records additional "uncertain" and "unmatched" terrain features to be included in the existing terrain mapping database. For example, the method 400 identifies a set of terrain features of an area substantially surrounding a navigation platform, the navigation platform having a system for simultaneous localization and mapping (block 402). In one implementation, the method 400 identifies a current position estimate from a terrain correlation prediction model (similar to the prediction model discussed above with respect to FIG. 3) that matches with one or more previously-identified terrain feature measurements from at least one sensor element of the navigation system. For each terrain feature identified, the method 400 records current navigational data as the navigation platform traverses the area (block 404). In one implementation, the method 400 records the navigational data of the area encompassing the identified terrain features to determine, in near real time, a probability distribution of one or more of the identified terrain features measured with at least one sensor element of the navigation system.

The method 400 correlates the current navigational data of each of the identified terrain features with prior navigational data of previously-determined terrain features from an existing terrain mapping database accessed by the navigation platform (block 406). When the correlated navigational data exceeds a prescribed correlation threshold (block 408), the method 400 repeats at block 406 until the recorded navigational data are within the prescribed correlation threshold. In one implementation, the method 400 compares the current navigational data with the prior navigational data to determine if at least one of the currently identified terrain features matches one or more of the previously-determined terrain features in the existing terrain mapping database. As discussed above with respect to FIG. 3, the method 400 validates the correlated data to remove any sample comparisons that exceed the prescribed correlation threshold. From at least the correlated navigational data of the identified terrain features, the method 400 provides a current position estimate for the navigation platform (block 410). In one embodiment, the method 400 uses the current position estimate of the navigation platform to predict a location of each of the identified local terrain features. The method 400 further incorporates the predicted terrain feature locations that are not found in the prior navigational data of the previously-determined terrain features as additional terrain features to be navigated by the navigation platform and recorded in the existing terrain mapping database. As discussed above with respect to FIG. 3, in one implementation, the additional terrain features are translated into a suitable representation for the existing terrain mapping database of the previously-determined terrain features.

The methods and techniques described herein may be implemented in a combination of digital electronic circuitry and software (or firmware) residing in a programmable processor. An apparatus embodying these techniques may include appropriate input and output devices, a programmable processor, and a storage medium tangibly embodying program instructions for execution by the programmable processor. A process embodying these techniques may be performed by a programmable processor executing a program of instructions that operates on input data and generates appropriate output data. The techniques may be implemented in one or more programs that are executable on a programmable system including at least one programmable processor coupled to receive data and instructions from (and to transmit data and instructions to) a data storage system, at least one input device, and at least one output device. Generally, a processor will receive instructions and data from at least one of a read only memory (ROM) and a random access memory (RAM). In addition, storage media suitable for tangibly embodying computer program instructions and data include all forms of non-volatile memory, and include by way of example, semiconductor memory devices; magnetic disks such as internal hard disks and removable disks; magneto-optical discs; optical discs, and other computer-readable media. Any of the foregoing may be supplemented by, or incorporated in, specially-designed application-specific integrated circuits (ASICs).

When information is transferred or provided over a network or another communications connection (either hardwired, wireless, or a combination of hardwired or wireless) to a computer, a computer properly views the connection as a computer-readable medium. Thus, any such connection is properly termed a computer-readable medium. Combinations of the above are also included within the scope of computer-readable media.

This description has been presented for purposes of illustration, and is not intended to be exhaustive or limited to the embodiments disclosed. Variations and modifications may occur, which fall within the scope of the following claims.

## Claims

1. A navigation system (100), comprising:
a sensor element (104) operable to measure, within a first frame, terrain features of an area adjacent to the navigation system at a first time and within at least one second frame at a second time;
an inertial measurement unit (IMU) (102) operable to obtain navigational data at the first and second times; and
a processing unit (106) coupled to the IMU and the sensor element, the processing unit configured to,
based at least in part on a terrain correlation prediction model (300), predict a current state and position of a host platform having the navigation system at first and second times;
**characterised in that** the processing unit is further configured to determine an actual location of one or more of the terrain features of the area adjacent to the navigation system by correlating terrain features using three-dimensional feature probability distribution measurements provided from the sensor element at the first and second times; and further **characterised in that**
a memory unit (112) in operative communication with the processing unit is configured to:
store a database (328) of terrain data to perform simultaneous localization and mapping based on the navigational data obtained during at least one of the first and second times by the processing unit; and
record navigational properties of the sensor element to determine the probability distribution of the terrain features in the at least one second frame based on the navigational data obtained at the first and second times.

2. The system of claim 1, further comprising an output terminal (110) coupled to the processing unit, the output terminal configured to:
display the terrain features of previously-identified landmarks and any additional unmatched and uncertain objects (208) present in the area adjacent to the navigation system, and
display the current state and position of the navigation system based on signals received from the processing unit.

3. The system of claim 1, further comprising a navigation-aiding sensor (108) coupled to the processing unit, wherein the navigation-aiding sensor is one of a global positioning system (GPS) sensor, a magnetometer, a barometric altimeter, a Doppler radar, or an odometer, and wherein the processing unit is configured to estimate position based on the navigational data received from the navigation-aiding sensor, the IMU, and the sensor element.

4. The system of claim 1, wherein the processing unit is operable to:
identify a first scan location (A1) of the terrain features in each first frame;
select a second scan location (A2) in the at least one second frame based on the navigational data from the IMU; and
evaluate frame scans near the second scan location to identify the actual location of the one or more terrain features in the at least one second frame.

5. The system of claim 4, wherein the processing unit is further configured to:
correlate each of the terrain features by comparing a position estimate of each of the terrain features in the first frame with a position estimate of each of the terrain features in the at least one second frame using the terrain correlation prediction model (306); and
filter the correlated terrain features to determine the change in position of the host platform based on the probability distribution between the first and second sets of terrain features (314).

6. The system of claim 1, wherein the sensor element is at least one of a range finder, a ladar, a millimeter wave radar, or a vision sensor.

7. A method of navigating from terrain features (400), the method comprising:
identifying a set of terrain features of an area substantially surrounding a navigation platform (402), the navigation platform having a system for simultaneous localization and mapping according to the navigation system of claim 1;
for each terrain feature identified, recording current navigational data as the navigation platform traverses the area (404);
correlating the current navigational data of each of the identified terrain features with prior navigational data of previously-determined terrain features from an existing terrain mapping database accessed by the navigation platform (406) to within a prescribed correlation threshold (408); and
from at least the correlated navigational data of the identified terrain features, providing a current position estimate for the navigation platform (410).

8. The method of claim 7, further comprising:
using the current position estimate of the navigation platform to predict a location of each of the identified terrain features; and
incorporating the predicted terrain feature locations that are not found in the prior navigational data of the previously-determined terrain features as additional terrain features to be navigated by the navigation platform and recorded in the existing terrain mapping database.

9. The method of claim 8, wherein incorporating the predicted terrain features not found in the prior navigational data of the previously-determined terrain features comprises translating the additional terrain features into a suitable representation for the existing terrain mapping database of the previously-determined terrain features.

10. The method of claim 7, wherein identifying the set of terrain features of the area substantially surrounding the navigation platform comprises identifying a current position estimate from a terrain correlation prediction model (300) that matches with one or more previously-identified terrain feature measurements from at least one sensor element (104) of the navigation system.

11. The method of claim 7, wherein recording the current navigational data as the navigation platform traverses the area further comprises determining, in near real time, a probability distribution of one or more of the identified terrain features measured with at least one sensor element of the navigation system.

12. The method of claim 7, wherein correlating the current navigational data of each of the identified terrain features with the navigational data of the previously-determined local terrain features comprises:
comparing the current navigational data with the prior navigational data to determine if at least one of the identified terrain features matches one or more of the previously-determined terrain features in the existing terrain mapping database; and
validating the correlated data to remove any sample comparisons that exceed the prescribed correlation threshold.

13. A computer-readable storage medium having processor executable instructions for implementing a method of navigating from terrain features according to claim 7.

## Patentansprüche

1. Navigationssystem (100), umfassend:
ein Sensorelement (104), das betreibbar ist, um in einem ersten Bezugssystem Geländemerkmale eines an das Navigationssystem angrenzenden Bereichs zu einem ersten Zeitpunkt und in mindestens einem zweiten Bezugssystem zu einem zweiten Zeitpunkt zu messen;
eine Trägheitsmesseinheit bzw. IMU (102), die betreibbar ist, um Navigationsdaten an dem ersten und zweiten Zeitpunkt zu erhalten; und
eine mit der IMU und dem Sensorelement gekoppelte Verarbeitungseinheit (106), wobei die Verarbeitungseinheit für Folgendes ausgelegt ist:
Vorhersagen eines aktuellen Zustands und einer aktuellen Position einer Hostplattform, die das Navigationssystem aufweist, zu dem ersten und zweiten Zeitpunkt mindestens teilweise auf der Basis eines Geländekorrelationsvorhersagemodells (300);
**dadurch gekennzeichnet, dass** die Verarbeitungseinheit ferner für Folgendes ausgelegt ist: Bestimmen eines tatsächlichen Orts eines oder mehrerer der Geländemerkmale des an das Navigationssystem angrenzenden Bereichs durch Korrelieren von Geländemerkmalen unter Verwendung von dreidimensionalen Merkmalwahrscheinlichkeitsverteilungsmessungen, die von dem Sensorelement zu dem ersten und zweiten Zeitpunkt geliefert werden; und ferner **dadurch gekennzeichnet, dass**
eine Speichereinheit (112) in wirksamer Kommunikation mit der Verarbeitungseinheit für Folgendes ausgelegt ist:
Speichern einer Datenbank (328) von Geländedaten, um gleichzeitige Lokalisierung und Abbildung auf der Basis der durch die Verarbeitungseinheit während des ersten und/oder zweiten Zeitpunkts erhaltenen Navigationsdaten durchzuführen; und
Aufzeichnen von Navigationseigenschaften des Sensorelements, um die Wahrscheinlichkeitsverteilung der Geländemerkmale in dem mindestens einen zweiten Bezugssystem auf der Basis der zu dem ersten und zweiten Zeitpunkt erhaltenen Navigationsdaten zu bestimmen.

2. System nach Anspruch 1, das ferner ein mit der Verarbeitungseinheit gekoppeltes Ausgabeterminal (110) umfasst, wobei das Ausgabeterminal für Folgendes ausgelegt ist:
Anzeigen der Geländemerkmale der zuvor identifizierten Landzeichen und etwaiger zusätzlicher nichtübereinstimmender und unbestimmter Objekte (208), die in dem an das Navigationssystem angrenzenden Bereich anwesend sind, und
Anzeigen des aktuellen Zustands und der aktuellen Position des Navigationssystems auf der Basis von aus der Verarbeitungseinheit empfangenen Signalen.

3. System nach Anspruch 1, das ferner einen mit der Verarbeitungseinheit gekoppelten Navigationshilfssensor (108) umfasst, wobei der Navigationshilfssensor eine der Alternativen Sensor eines globalen Positionsbestimmungssystems bzw. GPS, ein Magnetometer, ein barometrischer Höhenmesser, ein Dopplerradar oder ein Wegmesser ist, und wobei die Verarbeitungseinheit dafür ausgelegt ist, Position auf der Basis der aus dem Navigationshilfssensor, der IMU und dem Sensorelement empfangenen Navigationsdaten zu schätzen.

4. System nach Anspruch 1, wobei die Verarbeitungseinheit für Folgendes betreibbar ist:
Identifizieren eines ersten Scan-Orts (A1) der Geländemerkmale in jedem ersten Bezugssystem;
Auswählen eines zweiten Scan-Orts (A2) in dem mindestens einen zweiten Bezugssystem auf der Basis der Navigationsdaten aus der IMU; und
Evaluieren von Bezugssystem-Scans in der Nähe des zweiten Scan-Orts, um den tatsächlichen Ort des einen oder der mehreren Geländemerkmale in dem mindestens einen zweiten Bezugssystem zu identifizieren.

5. System nach Anspruch 4, wobei die Verarbeitungseinheit ferner für Folgendes ausgelegt ist:
Korrelieren jedes der Geländemerkmale durch Vergleichen einer Positionsschätzung jedes der Geländemerkmale in dem ersten Bezugssystem mit einer Positionsschätzung jedes der Geländemerkmale in dem mindestens einen zweiten Bezugssystem unter Verwendung des Geländekorrelationsvorhersagemodells (306); und
Filtern der korrelierten Geländemerkmale, um die Positionsänderung der Hostplattform auf der Basis der Wahrscheinlichkeitsverteilung zwischen der ersten und zweiten Menge von Geländemerkmalen (314) zu bestimmen.

6. System nach Anspruch 1, wobei das Sensorelement eine der folgenden Alternativen ist: ein Entfernungsmesser, ein Lader, ein Millimeterwellenradar oder ein Vision-Sensor.

7. Verfahren zum Navigieren aus Geländemerkmalen (400), wobei das Verfahren Folgendes umfasst:
Identifizieren einer Menge von Geländemerkmalen eines Bereichs, der eine Navigationsplattform (402) im Wesentlichen umgibt, wobei die Navigationsplattform ein System zur gleichzeitigen Lokalisierung und Abbildung gemäß dem Navigationssystem von Anspruch 1 aufweist;
Aufzeichnen von aktuellen Navigationsdaten für jedes identifizierte Geländemerkmal, während die Navigationsplattform den Bereich (404) durchquert;
Korrelieren der aktuellen Navigationsdaten jedes der identifizierten Geländemerkmale mit vorherigen Navigationsdaten von zuvor bestimmten lokalen Geländemerkmalen aus einer existierenden Geländeabbildungsdatenbank, auf die die Navigationsplattform (406) zugreift, bis auf eine vorbeschriebene Korrelationsschwelle (408); und
Bereitstellen einer aktuellen Positionsschätzung für die Navigationsplattform (410) aus mindestens den korrelierten Navigationsdaten der identifizierten Geländemerkmale.

8. Verfahren nach Anspruch 7, ferner umfassend:
Verwenden der aktuellen Positionsschätzung der Navigationsplattform, um einen Ort jedes der identifizierten Geländemerkmale vorherzusagen; und
Integrieren der vorhergesagten Geländemerkmalorte, die in den vorherigen Navigationsdaten der zuvor bestimmten Geländemerkmale nicht gefunden werden, als zusätzliche durch die Navigationsplattform zu navigierende und in der existierenden Geländeabbildungsdatenbank aufzuzeichnende Geländemerkmale.

9. Verfahren nach Anspruch 8, wobei das Integrieren der nicht in den vorherigen Navigationsdaten der zuvor bestimmten Geländemerkmale gefundenen vorhergesagten Geländemerkmalorte Folgendes umfasst: Übersetzen der zusätzlichen Geländemerkmale in eine geeignete Darstellung für die existierende Geländeabbildungsdatenbank der zuvor bestimmten Geländemerkmale.

10. Verfahren nach Anspruch 7, wobei das Identifizieren der Menge von Geländemerkmalen des die Navigationsplattform im Wesentlichen umgebenden Bereichs Folgendes umfasst: Identifizieren einer aktuellen Positionsschätzung aus einem Geländekorrelationsvorhersagemodell (300), das mit einer oder mehreren zuvor identifizierten Geländemerkmalmessungen aus mindestens einem Sensorelement (104) des Navigationssystems übereinstimmt.

11. Verfahren nach Anspruch 7, wobei das Aufzeichnen der aktuellen Navigationsdaten, während die Navigationsplattform den Bereich durchquert, ferner Folgendes umfasst: Bestimmen einer Wahrscheinlichkeitsverteilung eines oder mehrerer der mit mindestens einem Sensorelement des Navigationssystems gemessenen identifizierten Geländemerkmale in nahezu Echtzeit.

12. Verfahren nach Anspruch 7, wobei das Korrelieren der aktuellen Navigationsdaten jedes der identifizierten Geländemerkmale mit den vorherigen Navigationsdaten der zuvor bestimmten lokalen Geländemerkmale Folgendes umfasst:
Vergleichen der aktuellen Navigationsdaten mit den vorherigen Navigationsdaten, um zu bestimmen, ob mindestens eines der identifizierten Geländemerkmale mit einem oder mehreren der zuvor bestimmten Geländemerkmale in der existierenden Geländeabbildungsdatenbank übereinstimmt; und
Validieren der korrelierten Daten, um jegliche Stichprobenvergleiche zu entfernen, die die vorgeschriebene Korrelationsschwelle überschreiten.

13. Computerlesbares Speichermedium, das prozessorausführbare Anweisungen zum Implementieren eines Verfahrens zum Navigieren aus Geländemerkmalen nach Anspruch 7 aufweist.

## Revendications

1. Système de navigation (100), comprenant :
un élément capteur (104) apte à mesurer des traits caractéristiques de terrain d'une région adjacente au système de navigation dans une première image à un premier instant et dans au moins une deuxième image à un deuxième instant ;
une unité de mesure inertielle (IMU) (102) apte à obtenir des données de navigation aux premier et deuxième instants ; et
une unité de traitement (106) reliée à l'IMU et à l'élément capteur, l'unité de traitement étant conçue pour prédire, en fonction en partie au moins d'un modèle de prédiction de corrélation de terrain (300), un état et une position actuels d'une plateforme hôte équipée du système de navigation aux premier et deuxième instants ;
**caractérisé en ce que** :
l'unité de traitement est en outre conçue pour établir un emplacement effectif d'un ou de plusieurs traits caractéristiques de terrain de la région adjacente au système de navigation en corrélant des traits caractéristiques de terrain à l'aide de mesures de distribution de probabilités de traits caractéristiques en trois dimensions fournies par l'élément capteur aux premier et deuxième instants ; et
**caractérisé en outre en ce que** :
une unité mémoire (112) en communication fonctionnelle avec l'unité de traitement est conçue pour :
mémoriser une base de données (328) de données de terrain pour réaliser une localisation et une cartographie simultanées en fonction des données de navigation obtenues durant le premier et/ou le deuxième instant(s) par l'unité de traitement ; et
enregistrer des propriétés de navigation de l'élément capteur pour établir la distribution de probabilités des traits caractéristiques de terrain dans ladite au moins une deuxième image en fonction des données de navigation obtenues aux premier et deuxième instants.

2. Système selon la revendication 1, comprenant en outre un terminal de sortie (110) relié à l'unité de traitement, le terminal de sortie étant conçu pour :
afficher les traits caractéristiques de terrain de points de repère préalablement identifiés et d'éventuels objets supplémentaires sans correspondance et incertains (208) présents dans la région adjacente au système de navigation, et
afficher l'état et la position actuels du système de navigation en fonction de signaux reçus de l'unité de traitement.

3. Système selon la revendication 1, comprenant en outre un capteur d'aide à la navigation (108) relié à l'unité de traitement, le capteur d'aide à la navigation étant choisi parmi un capteur de système mondial de localisation (GPS), un magnétomètre, un altimètre barométrique, un radar Doppler et un odomètre, et l'unité de traitement étant conçue pour estimer la position en fonction des données de navigation reçues du capteur d'aide à la navigation, de l'IMU et de l'élément capteur.

4. Système selon la revendication 1, l'unité de traitement étant apte à :
identifier un premier emplacement de balayage (A1) des traits caractéristiques de terrain dans chaque première image ;
sélectionner un deuxième emplacement de balayage (A2) dans ladite au moins une deuxième image en fonction des données de navigation provenant de l'IMU ; et
évaluer des balayages d'image à proximité du deuxième emplacement de balayage pour identifier l'emplacement effectif du ou des traits caractéristiques de terrain dans ladite au moins une deuxième image.

5. Système selon la revendication 4, l'unité de traitement étant en outre conçue pour :
corréler chacun des traits caractéristiques de terrain en comparant une estimation de position de chacun des traits caractéristiques de terrain dans la première image à une estimation de position de chacun des traits caractéristiques de terrain dans ladite au moins une deuxième image à l'aide du modèle de prédiction de corrélation de terrain (306) ; et
filtrer les traits caractéristiques de terrain corrélés pour établir le changement de position de la plateforme hôte en fonction de la distribution de probabilités entre les premier et deuxième ensembles de traits caractéristiques de terrain (314).

6. Système selon la revendication 1, l'élément capteur étant au moins un des éléments suivants : un télémètre, un radar laser, un radar à ondes millimétriques ou un capteur de vision.

7. Procédé de navigation à partir de traits caractéristiques de terrain (400), le procédé comprenant les étapes consistant à :
identifier un ensemble de traits caractéristiques de terrain d'une région entourant sensiblement une plateforme de navigation (402), la plateforme de navigation étant équipée d'un système de localisation et de cartographie simultanées conforme au système de navigation selon la revendication 1 ;
pour chaque trait caractéristique de terrain identifié, enregistrer des données de navigation actuelles au cours de la traversée de la région par la plateforme de navigation (404) ;
corréler les données de navigation actuelles de chacun des traits caractéristiques de terrain identifiés avec des données de navigation antérieures de traits caractéristiques de terrain locaux préalablement établis provenant d'une base de données de cartographie de terrain existante accessible par la plateforme de navigation (406) à un seuil de corrélation prescrit près (408) ; et
à partir au moins des données de navigation corrélées des traits caractéristiques de terrain identifiés, fournir une estimation de position actuelle de la plateforme de navigation (410).

8. Procédé selon la revendication 7, comprenant en outre les étapes consistant à :
utiliser l'estimation de position actuelle de la plateforme de navigation pour prédire un emplacement de chacun des traits caractéristiques de terrain identifiés ; et
incorporer les emplacements prédits des traits caractéristiques de terrain absents des données de navigation antérieures des traits caractéristiques de terrain préalablement établis au titre de traits caractéristiques de terrain supplémentaires à l'aide desquels la plateforme de navigation doit naviguer et à enregistrer dans la base de données de cartographie de terrain existante.

9. Procédé selon la revendication 8, l'étape consistant à incorporer les emplacements prédits des traits caractéristiques de terrain absents des données de navigation antérieures des traits caractéristiques de terrain préalablement définis comprenant l'étape consistant à convertir les traits caractéristiques de terrain supplémentaires en une représentation adaptée pour la base de données de cartographie de terrain existante des traits caractéristiques de terrain préalablement établis.

10. Procédé selon la revendication 7, l'étape consistant à identifier l'ensemble de traits caractéristiques de terrain de la région entourant sensiblement la plateforme de navigation comprenant l'étape consistant à identifier une estimation de position actuelle à partir d'un modèle de prédiction de corrélation de terrain (300) qui corresponde à une ou plusieurs mesures de traits caractéristiques de terrain préalablement identifiés provenant d'au moins un élément capteur (104) du système de navigation.

11. Procédé selon la revendication 7, l'étape consistant à enregistrer les données de navigation actuelles au cours de la traversée de la région par la plateforme de navigation comprenant en outre l'étape consistant à établir, en temps quasi réel, une distribution de probabilités d'un ou de plusieurs traits caractéristiques de terrain identifiés mesurés par au moins un élément capteur du système de navigation.

12. Procédé selon la revendication 7, l'étape consistant à corréler les données de navigation actuelles de chacun des traits caractéristiques de terrain identifiés avec les données de navigation antérieures des traits caractéristiques de terrain locaux préalablement établis comprenant les étapes consistant à :
comparer les données de navigation actuelles aux données de navigation antérieures pour établir si au moins un des traits caractéristiques de terrain identifiés correspond à un ou plusieurs traits caractéristiques de terrain préalablement établis dans la base de données de cartographie de terrain existante ; et
valider les données corrélées pour éliminer d'éventuelles comparaisons d'échantillons excédant le seuil de corrélation prescrit.

13. Support d'enregistrement lisible par un ordinateur comprenant des instructions exécutables par un processeur permettant de mettre en oeuvre un procédé de navigation à partir de traits caractéristiques de terrain selon la revendication 7.
